# EUROPEAN PATENT APPLICATION

(11) **EP 2 055 528 A1**
(43) Date of publication of application: **06.05.2009**
(21) Application number: 07254334.1
(22) Date of filing: 01.11.2007
(51) Int. Cl.: B60Q 1/076

(54) **Vehicular lamp having an extension coupler**

(71) Applicant: T.Y.C. Brother Industrial Co., Ltd., Tainan (TW)
(72) Inventor: Su, Shih-Chang, Tainan City (TW)
(74) Representative: Midgley, Jonathan Lee

(57) **Abstract**

A vehicular lamp includes a housing (3) defining a chamber (32), a reflector (41) disposed movably in the chamber (32), a hanging mechanism (5) to hang the reflector (41) within the chamber (32), and an adjusting unit (6) for adjusting an inclining angle of the reflector (41) . The adjusting unit (6) includes a fixed seat (62) connected to the reflector (41) and having a universal joint socket (624), and an electric adjustor (61) having a motor (612), a push shaft (613) connected to and driven by the motor (612), a mounting seat (611) disposed around the push shaft (613) and attached to the housing (3), an extension coupler (7) receiving and clamping the push shaft (613), and a joint head (73) projecting from the extension coupler (7) in a direction away from the push shaft (613) and engaging the universal joint socket (624).

## Description

This invention relates to a vehicular lamp, more particularly to a vehicular lamp that has an adjusting unit for adjusting an inclining angle of a reflector.

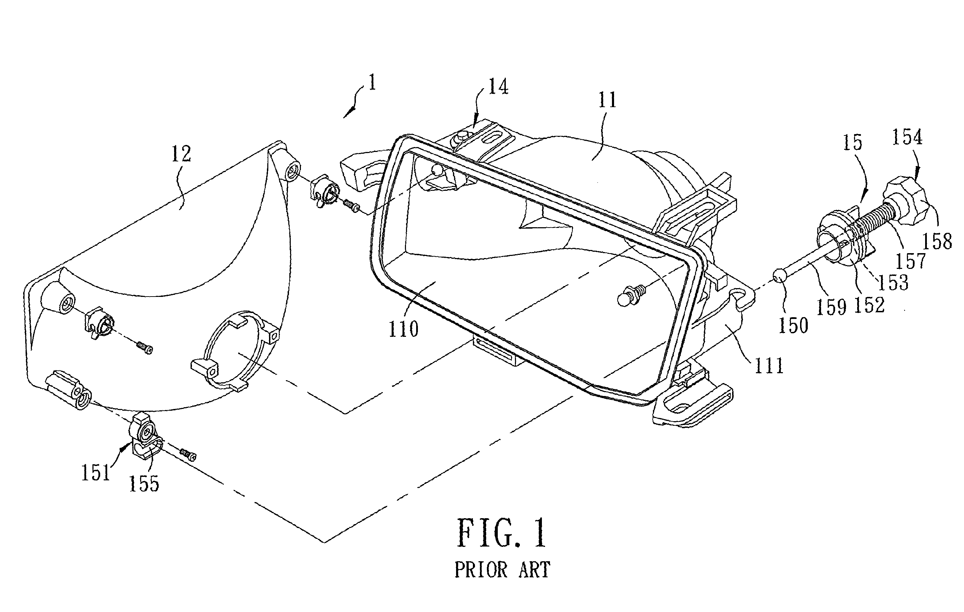

Referring to Fig. 1, a conventional manually operable vehicular lamp 1 includes a housing 11, a reflector 12, a lamp cover (not shown) disposed in front of the housing 11, a hanging mechanism 14 to hang movably the reflector 12 in a receiving space 110 of the housing 11, a light bulb (not shown) installed in the center of the reflector 12, and an adjusting mechanism 15 installed between the housing 11 and the reflector 12 for adjusting an inclining angle of the reflector 12.

The adjusting mechanism 15 includes a fixed seat 151 installed at a back bottom portion of the reflector 12 and having a universal joint socket 155, a mounting seat 152 fixed to a mounting part 111 of the housing 11, and a hand-operated rod 154 having a threaded section 157 connected to a threaded portion 153 of the mounting seat 152, a knob 158 disposed at the back of the threaded section 157, and a non-threaded section 159 extending forwardly from the threaded section 157. The non-threaded section 159 extends into the housing 11 through the mounting part 111, and has a front ball-shaped head 150 extending rotatably into the universal joint socket 155.

When the hand-operated rod 154 is rotated through the knob 158, a distance between the knob 158 and the mounting seat 152 can be adjusted so as to push or pull the fixed seat 151. Since the fixed seat 151 is fixed to the back bottom portion of the reflector 12, a bottom end of the reflector 12 is brought along by the fixed seat 151 to move forward or rearward to thereby achieve the purpose of adjusting the inclining angle of the reflector 12.

Although the vehicular lamp 1 can achieve the purpose of adjusting manually the inclining angle of the reflector 12, since the structure of the adjusting mechanism 15 is different from that of an adjusting mechanism of a motor-driven vehicular lamp, when the vehicular lamp 1 is installed in a car and the user desires to change the vehicular lamp 1 into a motor-driven one, the user cannot do so without changing the reflector 12, the housing 11, and the other components related thereto.

Referring to Fig. 2, a vehicular lamp 2, as disclosed in U.S. Patent No. 5,993,032, includes a housing 21, a reflector 22, a hanging mechanism 23 for mounting movably the reflector 22 in a receiving space 210 of the housing 21, a lamp cover 24 disposed in front of the housing 21, a light source (not shown) installed in the reflector 22, and an adjusting device 25 installed on a back bottom portion of the housing 21. The reflector 22 has a counterpart 222 projecting rearwardly from a location proximate to a bottom end thereof. The adjusting device 25 has a motor 250 mounted on the housing 21, a moving shaft 251 driven by the motor 250, and a connecting seat 252 connected between the moving shaft 251 and the counterpart 222. The connecting seat 252 has a snap-on part 253 to snap onto the counterpart 222, a joint shell 255 to receive a front spherical head 254 of the moving shaft 251 so that the front spherical head 254 can move rotatably in the joint shell 255, and two connecting bars 256 connected between the snap-on part 253 and the joint shell 255.

When the motor 250 drives the moving shaft 251 to move forward or rearward, the moving shaft 251 pushes or pulls the connecting seat 252, and the connecting seat 252, in turn, brings along the back bottom portion of the reflector 22 tomove forward or rearward, thereby achieving the purpose of adjusting an inclining angle of the reflector 22.

Although the vehicular lamp 2 can achieve the purpose of electrically adjusting the inclining angle of the reflector 22, a special structure is needed for the connecting seat 252 in order to transmit the force of the adjusting device 25 to the reflector 22. The connecting seat 252 of such structure is not applicable to a manually operable vehicular lamp, such as the vehicular lamp 1 shown in Fig. 1.

Since the components of the aforementioned vehicular lamps 1, 2 cannot be interchanged, from the point of view of a manufacturer, vehicular lamps must be produced that have components with two different specifications, which is very inconvenient. From the point of view of a user, the above-described non-interchangeability of the components of the vehicular lamp 1, 2 is such that when the user decides to change the method of adjusting the inclining angle of the reflector 12, 22 from a manual to a motor-driven one or vice versa, the user must change the entire vehicular lamp 1, 2.

Therefore, a main object of the present invention is to provide an electric adjustor that can be used interchangeably with the conventional manually controlled adjusting mechanism 15 shown in Fig. 1.

Another object of the present invention is to provide a vehicular lamp having the aforesaid electric adjustor so that adjustment of a reflector can be converted into an electric control mode from a manual control mode and vice versa.

According to one aspect of this invention, a vehicular lamp comprises a housing defining a chamber, a reflector disposed movably in the chamber, a hanging mechanism to hang the reflector within the chamber, and an adjusting unit for adjusting an inclining angle of the reflector. The adjusting unit includes a fixed seat connected to the reflector and having a universal joint socket, and an electric adjustor having a motor, a push shaft connected to and driven by the motor, a mounting seat disposed around the push shaft and attached to the housing, an extension coupler receiving and clamping the push shaft, and a joint head projecting from the extension coupler in a direction away from the push shaft and engaging the universal joint socket.

According to another aspect of this invention, an adjusting unit is provided for adjusting an inclining angle of a reflector disposed within a housing of a vehicular lamp. The adjusting unit comprises a fixed seat adapted to be connected to the reflector and having a universal joint socket, and an electric adjustor including a motor, a push shaft connected to and driven by the motor, a mounting seat disposed around the push shaft and adapted to be fixed to the housing, an extension coupler receiving and clamping the push shaft, and a joint head projecting from the extension coupler in a direction away from the push shaft and engaging the universal joint socket.

Other features and advantages of the present invention will become apparent in the following detailed description of the preferred embodiment of the invention, with reference to the accompanying drawings, in which:
Fig. 1 is an exploded perspective view of a conventional manually operable vehicular lamp;

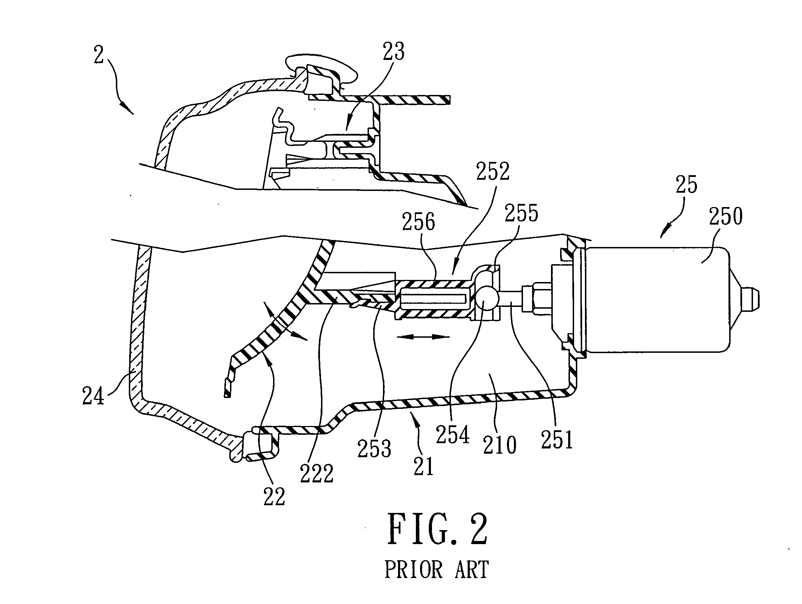

Fig. 2 is a sectional view of a conventional motor-driven vehicular lamp;
Fig. 3 is an exploded perspective view of the preferred embodiment of a vehicular lamp according to the present invention;
Fig. 4 is a fragmentary sectional view of the preferred embodiment;
Fig. 5 is a partially exploded perspective view of an extension coupler, a joint head, and a clamp ring of an electric adjustor of the preferred embodiment; and
Fig. 6 is an exploded perspective view of the preferred embodiment in a state of use, illustrating how the electric adjustor of the preferred embodiment may be interchangeably used with a manually operable adjustment unit.

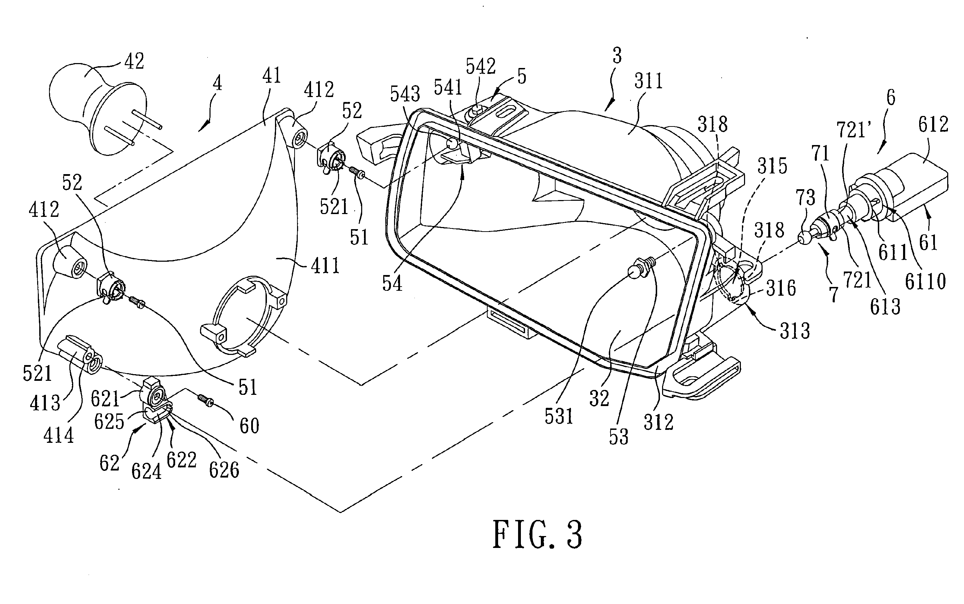

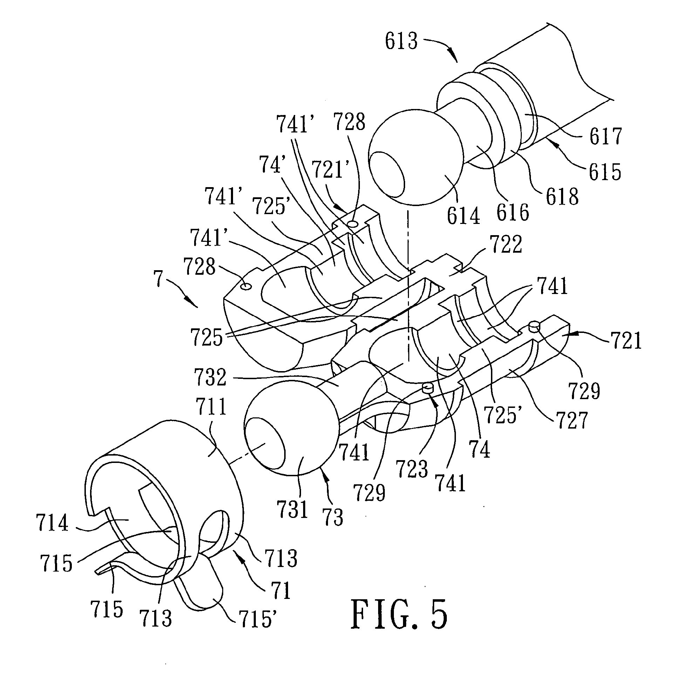

Referring to Figs. 3 to 6, the preferred embodiment of a vehicular lamp according to the present invention is shown to comprise a housing 3, a reflecting unit 4, a hanging mechanism 5, and an adjusting unit 6.

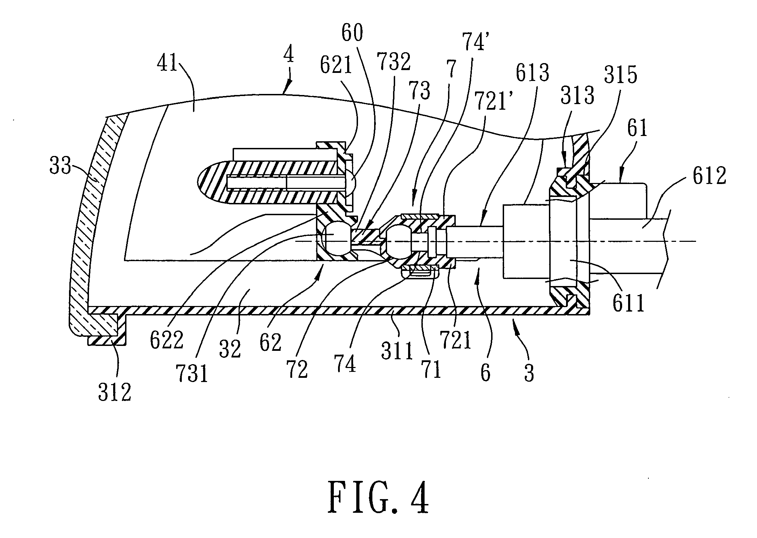

The housing 3 includes a substantially rectangular front frame 312, a rear shell 311 extending rearwardly from the front frame 312, and a mounting part 313 provided in a right rear bottom portion of the rear shell 311. The mounting part 313 has a tubular wall 316 defining a mounting slot 315 and formed with a plurality of angularly spaced-apart engaging recesses 318. A lamp cover 33 (see Fig. 4) is connected to the front frame 312 of the housing 3 and cooperates with the same to define a chamber 32.

The reflecting unit 4 is disposed movably in the chamber 32, and includes a reflector 41, and a light source, such as a light bulb 42, installed in the center of the reflector 41. The reflector 41 has a reflecting wall 411 with a shape matching that of the rear shell 311 of the housing 3, two studs 412 provided respectively on two opposite rear top sides of the reflecting wall 411, and two juxtaposed fixed tubes 413, 414 provided on a right rear bottom portion of the reflecting wall 411.

The hanging mechanism 5 is provided to hang movably the reflector 41 within the chamber 32, and includes two sockets 52 connected fixedly and respectively to the studs 412 by using two screws 51, respectively, a first support rod 53 connected to a right top side of the housing 3, and a transverse adjustment unit 54 provided on a left top side of the housing 3. Each of the sockets 52 has a receiving groove 521. The first support rod 53 has a connecting head 531 received pivotally in the receiving groove 521 of one of the sockets 52. The transverse adjustment unit 54 includes a second support rod 541 connected to the left top side of the housing 3, and a transverse moving set 542 for moving the second support rod 541 transversely. The second support rod 541 has a structure similar to that of the first support rod 53, and has a connecting head 543 received pivotally in the receiving groove 521 of the other one of the sockets 52. Since the manner of adjusting the left and right positions of the reflecting unit 4 is known in the art, a detailed description of the same is dispensed herewith for the sake of brevity.

The adjusting unit 6 includes an electric adjustor 61 and a fixed seat 62. The electric adjustor 61 includes a motor 612, a push shaft 613, amounting seat 611, an extension coupler 7, and a clamp ring 71. The push shaft 613 is connected to and driven by the motor 612 to move forward and rearward, and has a front ball-shaped end 614, and a stepped stem 615 connected to the front ball-shaped end 614 and the motor 612. The stepped stem 615 has a large diameter section 618 spaced apart from the front ball-shaped end 614, a neck section 616 interconnecting the large diameter section 618 and the front ball-shaped end 614, and a small diameter section 617 extending rearwardly from the large diameter section 618 opposite to the neck section 616.

The mounting seat 611 is disposed around the push shaft 613, and is received in the mounting slot 315 of the mounting part 313. The mounting seat 611 has a plurality of angularly spaced-apart projections 6110 projecting outwardly therefrom and engaging the engaging slots 318 in the tubular wall 316 of the mounting part 313. The motor 612 is installed on the mounting seat 611.

The extension coupler 7 is made of plastic, and includes two casing halves 721, 721', a hinge 722, and an interlocking unit 723. Each of the casing halves 721, 721' has a cavity 74, 74', and first and second sides 725, 725' that extend longitudinally of the push shaft 613 and that are disposed on two sides of the corresponding cavity 74, 74'. The cavity 74, 74' of each casing half 721, 721' has a plurality of cavity sections 741, 741' with different widths such that when the casinghalves 721, 721' are combined with each other, the cavity sections 741, 741' of the casing halves 721, 721' define a receiving space 72 (see Fig. 4) having different cross sections that correspond to those of the front ball-shaped end 614, the neck section 616, and the large and small diameter sections 618, 617 of the push shaft 613.

The hinge 722 interconnects the first sides 725 of the casing halves 721, 721'. The interlocking unit 723 includes two spaced-apart grooves 728 provided on the second side 725' of the casing half 721' , and two spaced-apart pins 729 provided on the second side 725' of the casing half 721. When the second sides 725' of the casing halves 721, 721' are brought together, the grooves 728 and pins 729 respectively interlock each other so as to clamp the push shaft 613 in the receiving space 72 defined by the casing halves 721, 721'. The extension coupler 7 further has an outer annular groove 727 formed on outer surfaces of the casing halves 721, 721' and extending around the receiving space 72.

A joint head 73 projects integrally from the casing half 721 in a direction away from the push shaft 613, and has a ball joint 731 with a diameter similar to that of the front ball-shaped end 614 of the push shaft 613, and a neck part 732 connected between the ball joint 731 and the casing half 721.

The clamp ring 71 is fitted in the outer annular groove 727 of the extension coupler 7 so as to extend around and fasten the casing halves 721, 721' together. However, there are other ways to fasten together the two casing halves 721, 721', such as by bonding together the casing halves 721, 721' using an adhesive. Use of the clamp ring 71 or any other such fastening means in this embodiment is optional. The clamp ring 71 has a main curved section 711 with a width not larger than that of the outer annular groove 727 of the extension coupler 7, two spaced-apart first tightening straps 713 projecting from the main curved section 711 and having tabs 715, and a second tightening strap 714 extending opposite to the first pull straps 713 and having a tab 715'. The first and second tightening straps 713, 714 bend toward each other until the second tightening strap 714 extends between the first tightening straps 713. By pressing the tabs 715, 715', the diameter of the clamp ring 71 may be increased to facilitate installation of the clamp ring 71 on the outer annular groove 727 of the extension coupler 7.

The fixed seat 62 of the adjusting unit 6 has an upper portion 621 connected non-rotatably to a rear side of the fixed tube 413 of the reflector 41 by using a screw 60, and a lower portion 622 projecting downwardly and integrally from the upper portion 621 and located at a rear side of the fixed tube 414. The lower portion 622 of the fixed seat 62 has a universal joint socket 624 which has a side entrance 625 and a constricted opening 626. The constricted opening 626 has a width smaller than a largest width of the ball joint 731.

The ball joint 731 of the joint head 73 extends into the universal joint socket 624 through the side entrance 625 of the fixed seat 62 with the neck part 732 extending through the constricted opening 626. As such, the joint head 73 is connected pivotally to the fixed seat 62.

When the motor 612 drives the push shaft 613 to move forward or rearward, the push shaft 613 will move the extension coupler 7, the joint head 73, and the fixed seat 62. Since the joint head 73 is connected pivotally to the universal joint socket 624 of the fixed seat 62, and since the fixed seat 62 is fixed to the reflector 41, the bottom end of the reflector 41 is brought to move forward or rearward along with the push shaft 613. As such, the purpose of adjusting an inclining angle of the reflector 41 is achieved.

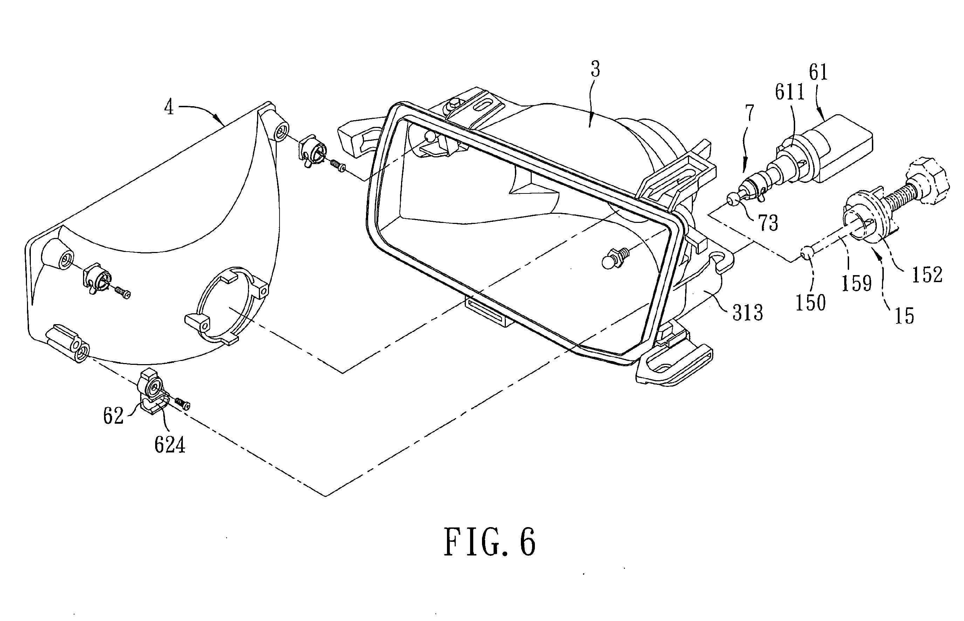

Referring to Fig. 6, in combination with Fig. 1, the construction of the housing 3 and the reflecting unit 4 is similar to that of the housing 11 and the reflector 12 of the conventional vehicular lamp 1. The electric adjustor 61 of the present invention may be used interchangeably with the conventional adjusting mechanism 15. Both of the electric adjustor 61 and the adjusting mechanism 15 can be attached to the mounting part 313 (see Fig. 3) of the housing 3 through the mounting seat 611 and the mounting seat 152 respectively thereof. The length of the electric adjustor 61 of the vehicular lamp of the present invention from the mounting seat 611 to the joint head 73 corresponds to the length of the conventional adjusting mechanism 15 from the mounting seat 152 to the front ball-shaped head 150.

Thus, the vehicular lamp of the present invention may be manufactured by using the conventional designs for the housing 3, the reflecting unit 4, the fixed seat 62, and the mounting seat 611. In addition, the manufacturer may produce a vehicular lamp with either an electric control mode of reflector adjustment or a manual control mode of reflector adjustment by altering a small number of simple assembly components. Moreover, with the electric adjustor 61 interchangeable with the conventional adjusting mechanism 15, the user may easily convert between an electric control mode and a manual control mode for adjustment of a reflector.

## Claims

1. A vehicular lamp, comprising:
a housing (3) defining a chamber (32);
a reflector (41) disposed movably in said chamber (32);
a hanging mechanism (5) to hang said reflector (41) within said chamber (32); and
an adjusting unit (6) for adjusting an inclining angle of said reflector (41), and including a fixed seat (62) that is connected to said reflector (41) and that has a universal joint socket (624), and an electric adjustor (61);
said vehicular lamp being **characterized in that:**
said electric adjustor (61) includes a motor (612), a push shaft (613) connected to and driven by said motor (612), a mounting seat (611) disposed around said push shaft (613) and attached to said housing (3), an extension coupler (7) receiving and clamping said push shaft (613), and a joint head (73) projecting from said extension coupler (7) in a direction away from said push shaft (613) and engaging said universal joint socket (624).

2. The vehicular lamp of Claim 1, **characterized in that** said extension coupler (7) includes two casing halves (721, 721') that are combined with each other to confine a receiving space (72), said joint head (73) projecting from one of said casing halves (721, 721'), said push shaft (613) being received in said receiving space (72) and clamped by said casing halves (721, 721').

3. The vehicular lamp of Claim 2, **characterized in that** said electric adjustor (61) further has a clamp ring (71) that extends around and that fastens said casing halves (721, 721') together.

4. The vehicular lamp of Claim 2, **characterized in that** said joint head (73) has a ball joint (731) extending into said universal joint socket (624), and said push shaft (613) has a ball-shaped end (614), and a stepped stem (615) connected to said ball-shaped end (614) and said motor (612).

5. The vehicular lamp of Claim 2, **characterized in that** said extension coupler (7) further has a hinge (722) and an interlocking unit (723), each of said casing halves (721, 721') having a cavity (74, 74'), and first and second sides (725, 725') that extend longitudinally of said push shaft (613) and that are disposed on two sides of said cavity (74, 74'), said hinge (722) interconnecting said first sides (725) of said casing halves (721, 721'), said interlocking unit (723) being disposed on and interlocking said second sides (725') of said casing halves (721, 721').

6. The vehicular lamp of Claim 5, **characterized in that** said interlocking unit (723) includes a groove (728) and a pin (729) interlocking each other and respectively provided on said second sides (725') of said casing halves (721, 721').

7. The vehicular lamp of Claim 3, **characterized in that** said extension coupler (7) further has an outer annular groove (727) formed on outer surfaces of said casing halves (721, 721') and extending around said receiving space (72), said clamp ring (71) being fitted in said outer annular groove (727).

8. An adjusting unit (6) for adjusting an inclining angle of a reflector (41) disposed within a housing (3) of a vehicular lamp, comprising:
a fixed seat (62) adapted to be connected to the reflector (41) and having a universal joint socket (624); and
an electric adjustor (61);
said adjusting unit (6) being **characterized in that**:
said electric adjustor (61) includes a motor (612), a push shaft (613) connected to and driven by said motor (612), a mounting seat (611) disposed around said push shaft (613) and adapted to be fixed to the housing (3), an extension coupler (7) receiving and clamping said push shaft (613), and a joint head (73) projecting from said extension coupler (7) in a direction away from said push shaft (613) and engaging said universal joint socket (624).

9. The adjusting unit of Claim 8, **characterized in that** said extension coupler (7) includes two casing halves (721, 721') that are combined with each other to confine a receiving space (72), said joint head (73) projecting from one of said casing halves (721, 721'), said push shaft (613) being received in said receiving space (72) and clamped by said casing halves (721, 721').

10. The adjusting unit of Claim 9, **characterized in that** said extension coupler (7) further has a hinge (722) and an interlocking unit (723), each of said casing halves (721, 721') having a cavity (74, 74'), and first and second sides (725, 725') that extend longitudinally of said push shaft (613) and that are disposed on two sides of said cavity (74, 74'), said hinge (722) interconnecting said first sides (725) of said casing halves (721, 721'), said interlocking unit (723) being disposed on and interlocking said second sides (725') of said casing halves (721, 721').

11. The adjusting unit of Claim 10, **characterized in that** said interlocking unit (723) has a groove (728) and a pin (729) interlocking each other and respectively provided on said second sides (725') of said casing halves (721, 721').

12. The adjusting unit of Claim 9, **characterized in that** said push shaft (613) has a ball-shaped end (614), and a stepped stem (615) connected to said ball-shaped end (614) and said motor (612), said receiving space (72) having a shape substantially corresponding to that of said push shaft (613).

13. The adjusting unit of Claim 8, **characterized in that** said electric adjustor (7) further has a clamp ring (71) that extends around and that fastens said casing halves (721, 721') together.
